# DEMANDE DE BREVET EUROPEEN

(11) **EP 0 927 664 A1**
(43) Date de publication de la demande: **07.07.1999**
(21) Numéro de dépôt: 98120765.7
(22) Date de dépôt: 02.11.1998
(51) Int. Cl.: B60R 9/042

(54) **Porte-charges sur fourgons utilitaires**

(30) Priorité: 08.12.1997 FR 9715602
(71) Demandeur: MACC, 86104 Chatellerault Cédex (FR)
(72) Inventeur: Merigot, Jean-Paul, MACC, 86104 Chatellerault (FR)

(57) **Abrégé**

L'invention concerne un porte-charges sur fourgons utilitaires composé de deux cadres fixes latéraux (1) et (1') reliés entre eux par des barres de toit télescopiques (7) dont ils sont solidaires au moyen des équerres (8) et (8') et comportant des pattes d'ancrage (12) et (12') dans les gouttières du véhicule. Les dits cadres (1) et (1') comportent chacun un palier (19) dans lequel tourne l'axe (3) solidaire de chacun des deux cadres mobiles volontairement inclinés (2) et (2') de façon à permettre indéfiniment leur rotation de 90° de l'arrière vers l'avant, ou de l'avant vers l'arrière, des deux faces latérales du fourgon équipé du porte-charges.

## Description

La diversité des modèles de véhicules routiers, du type fourgons utilitaires, fait que le chargement des différentes galeries dont ils sont fréquemment équipés, pose certaines difficultés. Pour pallier cet inconvénient il existe, outre les galeries de toit classiques, des porte-charges avec chargement sur le côté du fourgon utilitaire ayant fait

l'objet des protections désignées ci-après:

### Modèle DE-U 8703067 (Heinrich Wunder - GMBH et Co Kg)

Porte-bagages pour véhicules composé d'une pièce de base ajustable sur le véhicule au moyen de rails et d'une pièce dite potence recevant la charge à transporter sur le côté due véhicule et actionnée au moyen d'un dispositif central pour parmettre son basculement sur les dits rails.

### Modèle DE-U 8528282 (Reimo Reisemobil Center)

Porte-planche de surf composé de crochets porte-planche solidaires d'un profilé d'appui amovible relié à un porte-charge par des articulations et immobilisable en position haute sur la face extérieure du porte-charge.

### Brevet DE-A 3513085 (Abel Rainer)

Dispositif combiné de levage et de transport de bicyclette composé d'un cadre suspendu à deux barres de toit, d'un support lui-même suspendu et articulé au dit cadre ; le tout basculant sur le toit.

### Brevet FR-A 2596344 (Boisgerault)

Dispositif de galerie mobile pour véhicule composé d'un support fixe monté sur le toit et d'un chemin mobile qui, en position dite de transport, est disposé et immobilisé sur ledit support fixe et, en position dite de chargement, basculé sur le côte du véhicule.

### Brevet FR-A 2659918 (MACC)

Support de charges à l'extérieur des véhicules composé d'un cadre fixe solidaire de la carrosserie et d'un cadre mobile relié par un jeu de biellettes au dit cadre fixe.

L'analyse de ces différents modèles de galeries permettant un chargement sur le côté du véhicule, met en évidence la persistance de certaines difficultés opérationnelles auxquelles l'utilisateur est confronté. A titre d'exemple : le cadre mobile équipant ce type de galeries doit être remonté avec sa charge par l'utilisateur soit à la hauteur du cadre fixe solidaire du véhicule soit sur le toit. Cette manoeuvre exige un effort proportionnel au poids de la charge et à la hauteur due véhicule ; effort dépassant parfois les possibilités physiques de l'opérateur. Pour supprimer cette pénibilité, voire cette impossibilité, certaines galeries comportent des systèmes mécaniques d'assistance a la remontée des charges, source de coût, de poids, voire de fragilité dans le temps.

La présente invention concarne un porte-charges s'adaptant sur les véhicules routiers, de type fourgons utilitaires, avec ou sans gouttière, à toit normal ou surélevé et supprimant les difficultés opérationnelles rappelées ci-dessus.

Ca porte-charges présente deux possibilités de chargement et de transport des charges : latéralement sur un ou deux côtés du véhicule et, également, sur le dessus.

Le chargement latéral a pour avantage de faciliter, depuis le sol, le chargement de matériels d'une certaine longueur tels que échelles, barres, tubes, etc ... De plus, ce mode de chargement évite de monter sur le toit du véhicule, avantage appréciable pour des matériels transportés et utilisés fréquemment. Le chargement sur le dessus étant utilisé moins fréquemment, pour des charges plus encombrantes en dimensions et/ou plus lourdes.

Pour cela, ce porte-charges se compose de parties latérales réunies entre-elles par des barres de toit extensibles réglables.

Les parties latérales sont composées de deux cadres juxtaposés, l'un étant fixe et solidaire des barres par l'intermédiaire d'équerres, l'autre mobile en rotation et articulé autour d'un axe guidé dans un palier solidaire du cadre fixe.

Ce cadre mobile en rotation peut, soit venir en juxtaposition du cadre fixe "position transport", il est alors bloqué par une butée et un premier dispositif de verrouillage, sort après déblocage, pivoter de 90° et venir en croix par rapport au cadre fixe "position chargement ou déchargement". Il est alors maintenu dans cette position par un deuxième dispositif de verrouillage. Le cadre mobile, en position transport, est juxtaposé au cadre fixe mais incliné.

Cette inclinaison a deux buts, le premier de maintenir le cadre mobile, suivant une inclinaison, dans ses positions. En position chargement, cette inclinaison correspond à celle d'une échelle en utilisation, l'autre est d'éviter, lors de la rotation du cadre mobile, de toucher les portes coulissantes latérales.

Dans la position chargement, le cadre mobile qui est équipé de crochets d'appui, peut recevoir les matériels à charger (échelles, barres, etc ...). Ceux-ci seront sanglés sur ce cadre.

Une fois le chargement bien arrimé, le cadre mobile déverrouillé du cadre fixe peut alors être actionné en rotation avec facilité et sans effort par un opérateur, toujours situé au sol. Le cadre mobile décrit un quart de tour pour venir en butée sur une extrémité et être verrouillé à l'autre. Les deux cadres se retrouvant juxtaposés avec le chargement situé sur les côtés latéraux du toit.

Le disposition de la présente invention a pour avantage, notamment pour des professionnels du bâtiment qui transportent fréquemment des échelles, d'autoriser l'accès sur le dessus du toit sans la traditionnelle échelle dite de "coupée" dont les variétés de modèles et de fixations sont tributaires des modèles de véhicules.

En effet, comme il a été indiqué précédemment, le cadre mobile en position chargement présente la même inclinaison que celle nécessaire à l'utilisation d'une échelle en appui. Si ce cadre est chargé d'une échelle, celle-ci devient donc le moyen d'accès sur le toit ; moyen fiable puisque l'échelle, comme dit plus haut, est sanglée.

Dans le cas où le chargement de l'échelle, effectué au niveau du sol, doit être déchargé sur un sol de niveau différent (exemple : véhicule garé contre un trottoir), le dispositif de l'arrimage rapide permet, très aisément, en descendant ou en remontant l'échelle, d'effectuer cet appui sur le sol.

Une échelle ainsi disposée sur une partie latérale du véhicule, est un moyen d'accès à la partie supérieure du porte-charges pour assurer d'autres chargements sur le toit.

Un chemin de passage est fixé entre les barres reliant les deux cadres fixes. La barre située vers l'arrière du véhicule est équipée d'un rouleau facilitant le chargement des pièces longues (tubes, madriers, profilés, échelles, etc ...).

Ce rouleau est composé de deux tubes emboîtés l'un dans l'autre, ce qui rend l'ensemble télescopique pour son adaptation à toutes les largeurs de véhicules. Les barres de toit reçoivent une rambarde sur laquelle les charges précitées peuvent venir en appui et être arrimées.

La position de ce porte-charges sur le véhicule est déterminée par rapport à l'arrière pour deux raisons : la position du rouleau et le dépassement des charges à l'arrière du véhicule. En effet, celui-ci ne doit pas dépasser un mètre, dimension maximale pour laquelle il n'est pas exigé de signalisation particullère. Pour cette dernière disposition, le ou les cadres mobiles du porte-charges sont déverrouillables à l'arrière du véhicule et le pivotement de 90° se fait de l'arrière vers l'avant pour le déchargement.

Dans le cas de certains véhicules surélevés ou bas avec une porte latérale très haute montant au niveau du toit, le porte-charges ne sera équipé que d'un côté latéral du double cadre, l'autre côté se composera d'un panier latéral passant au-dessus de la porte. Ce panier est composé d'une rambarde verticale fixe et d'une partie tubulaire articulée et pivotant de 90° pour devenir horizontale en utilisation et servant, alors, de plateau porte-charge latéral.
La figure 1 représente, en perspective, le porte-charges avec ses deux parties latérales.
La figure 2 représente, en perspective, le porte-charges avec une partie latérale et le panier latéral.
La figure 3 montre le porte-charges avec une partie latérale, monté sur un véhicule à toit surélevé et à gouttières, le cadre mobile chargé d'une échelle et pivoté de 90°.
La figure 4 montre une vue de face d'une partie latérale.
La figure 5 montre, en vue partielle et en coupe, le dispositif d'articulation des deux cadres entre-eux.
La figure 6 montre le verrouillage du cadre mobile sur le cadre fixe en position horizontale pour le transport.
La figure 7 montre le blocage du cadre mobile en position verticale.
La figure 8 montre, en coupe, le verrouillage du cadre mobile en position verticale.
La figure 9 montre, en vue arrière, le porte-charges sur un véhicule.
La figure 10 montre, en vue partielle, la fixation dans une gouttière de véhicule.
La figure 11 montre le cadre mobile sous la forme d'une échelle.

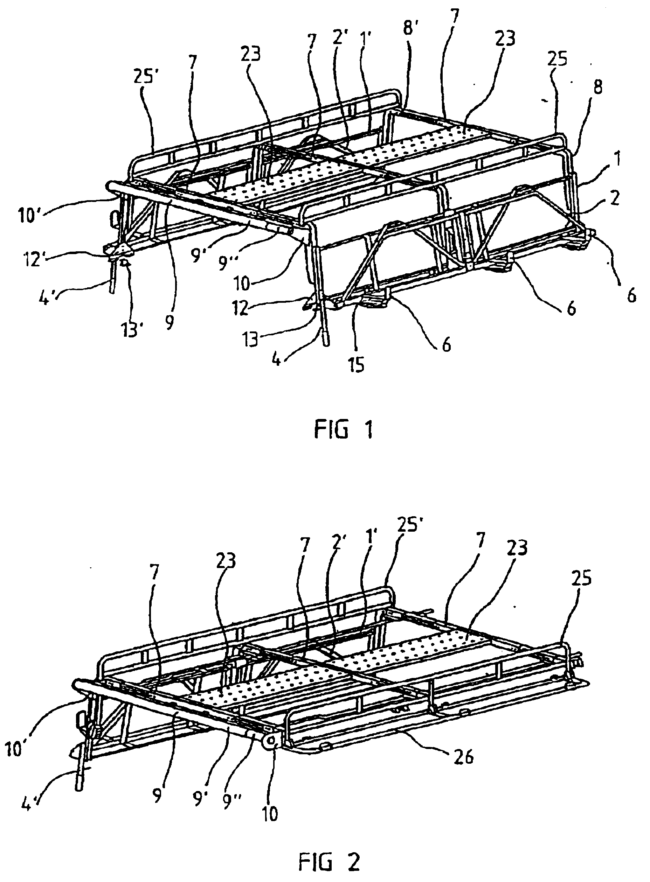

Comme le montrent les figures 1, 3, 4, 5, 6, 7, 8 et 10, le porte-charges est composé de parties latérales constituées d'un cadre fixe (1) et d'un cadre mobile (2) tournant autour d'un axe (3) solidaire du cadre (2). Les cadres fixes (1) et (1') sont reliés entre eux par des équerres (8) et (8') et des traverses télescopiques (7). Ces traverses télescopiques (7) permettent de s'adapter aux différentes largeurs de véhicules. Dans le cas de véhicules à gouttières, les cadres fixes (1) et (1') comportent des pattes d'ancrage (12) et (12') qui se glissent dans les gouttières, bloquées au moyen des pattes (13) et (13') et serrées par une vis (21). Dans le cas de véhicules sans gouttière, les cadres fixes (1) et (1') sont solidaires des plots réalisés par les fabricants d'automobiles et fixés directement sur le toit du véhicule.

Le cadre mobile fait rotation de 90° dans un palier (19) solidaire du cadre fixe (1). En position dite de transport, le cadre mobile (2) vient s'appuyer sur les butées (11) et (28) et est verrouillé sur le cadre (1) au moyen du verrou articulé (4) solidaire de ce même cadre fixe (1).

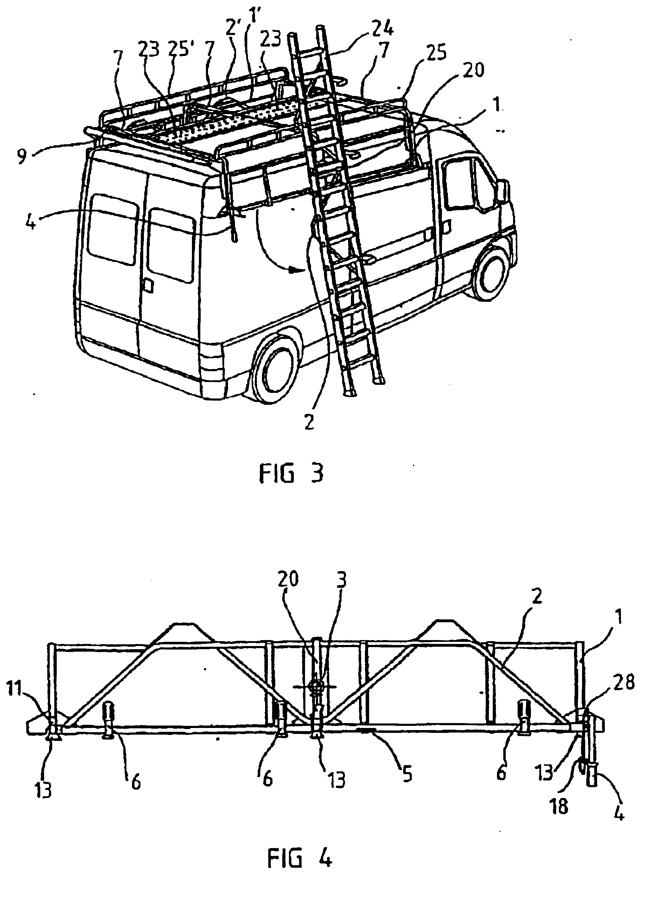

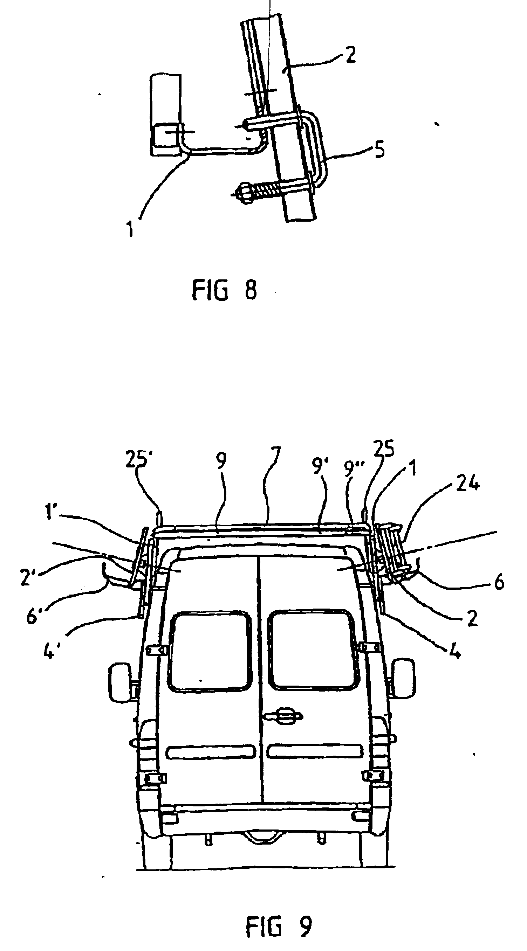

Toujours selon les figures 1, 3, 4, 5, 6, 7, 8 et 10, pour obtenir le cadre mobile (2) en position de chargement comme représenté plus particulièrement sur les figures 3 et 4, 5, 6 et 8, il est nécessaire de désolidariser le cadre mobile (2) du cadre fixe (1) au moyen du verrou (4) solidaire du cadre fixe (1) après avoir, dans un premier temps, enlevé la goupille de sécurité (18) et l'avoir fait pivoter vers l'arrière autour de son axe (17) pour dégager l'ergot (22) engagé dans le cadre mobile (2). Le cadre mobile (2) peut donc pivoter et venir, après une rotation de 90°, en butée sur le cadre fixe (1) et être de nouveau verrouillé sur celui-ci par la broche à ressort (5) comme représenté sur la figure 8. Cette même broche à ressort (5) est solidaire du cadre mobile (2).

Selon les figures 1,3, 4 et 8, les crochets (6) articulés sur le cadre mobile (2) autour de leur axe (15) sont alors déployés comme sur la figure 3. Une charge longue comme une échelle (24) peut être apposée contre ces crochets (6) comme représenté en figure 3 et sanglée sur le cadre mobile (2) au moyen d'une attache (20). Une fois la charge bien arrimée, le cadre mobile (2) est déverrouillé de sa position sur le cadre fixe (1) en agissant sur la broche à ressort (5) qui se dégage de son logement dans le cadre fixe (1). Le cadre mobile (2) peut alors pivoter et venir en appui dans les butées (11) et (28) du cadre fixe (1). L'immobilisation sur ce même cadre fixe (1) est réalisée par le verrou (4) en exécutant l'opération inverse citée plus avant dans le texte et en remettant la goupille de sécurité (18).

Selon les figures 3 et 4, une particularité importante des dispositions de la présente invention est que, dans le cas ou la charge est une échelle (24) celle-ci autorise confortablement l'accès sur les barres de toit (7) sur lesquelles peut être posé un chemin de passage (23).

Comme le montrent les figures 3, 5 et 9, le cadre mobile (2) est incliné par rapport au cadre fixe (1). Cette inclinaison a deux buts : donner à une échelle (24) la bonne inclinaison d'utilisation préconisée par les normes de sécurité et, d'autre part, d'éviter lors de la rotation du cadre mobile (2) de toucher des accessoires de côtés des véhicules et, notamment, les portes coulissantes.

L'opérateur ayant accès sur le toit, le chargement peut se faire pour des pièces ou charges longues à l'aide du rouleau (9). Ce rouleau (9) porté dans les équerres (10) et (10') solidaires des équerres (8) et (8') et dans lesquelles il tourne, est positionné à l'arrière du véhicule.

Selon la figure 3, ce rouleau (9) est composé de deux parties (9') et (9'') emboîtées l'une dans l'autre, ce qui le rend télescopique pour son adaptation à toutes les largeurs de véhicules.

Toujours selon la figure 3, si une charge telle qu'une échelle (24) est appuyée et sanglée sur le cadre mobile (2) à partir d'un niveau de sol et que celui-ci soit différent au déchargement, il suffit de relâcher l'arrimage réalisé au moyen d'une attache (20) et de faire glisser vers le haut ou le bas la charge pour qu'elle prenne bien appui sur le sol.

La figure 2 montre, en perspective, un porte-charges comportant un seul côté équipé d'un cadre fixe (1) et d'un cadre pivotant (2). Ce type de porte-charges est prévu pour équiper les véhicules ayant des portes latérales dont la hauteur est proche de la partie haute du toit et donc n'autorise pas la présence de cadres gênant l'entrée dans le véhicule. Sur ce côté est prévu un panier rabattable (26) articulé en trois points sur la rambarde (25).

Sur les figures 1, 2 et 3, le porte-charges objet de la présente invention est équipée de rambardes latérales (25) et (25'). Ces éléments solidaires des équerres (8) et (8') et des barres de toit (7) servent d'appui latéral aux matériels chargés sur les dites barres de toit (7) avec possibilité de les arrimer.

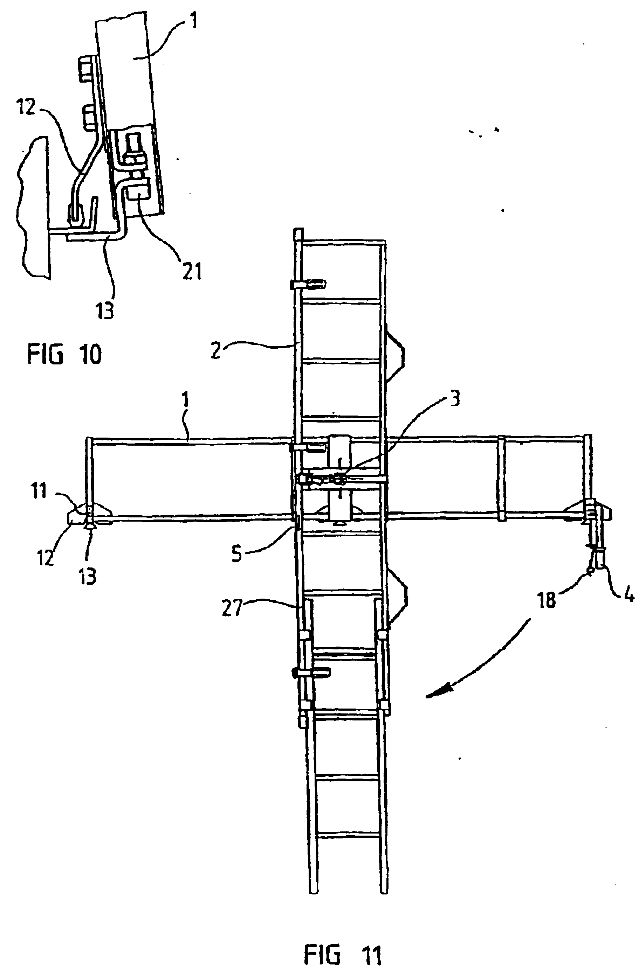

Suivant la figure 11, l'ossature du cadre mobile (2) peut être réalisée sous la forme d'une échelle porte-charges (27). Avantageusement, cette échelle peut comporter une partie télescopique de façon à rattraper tous les niveaux de sol. Cette disposition a pour objet de faciliter l'accès sur le toit du véhicule sans pour autant disposer d'une échelle transportée et fixée sur ledit cadre mobile (2).

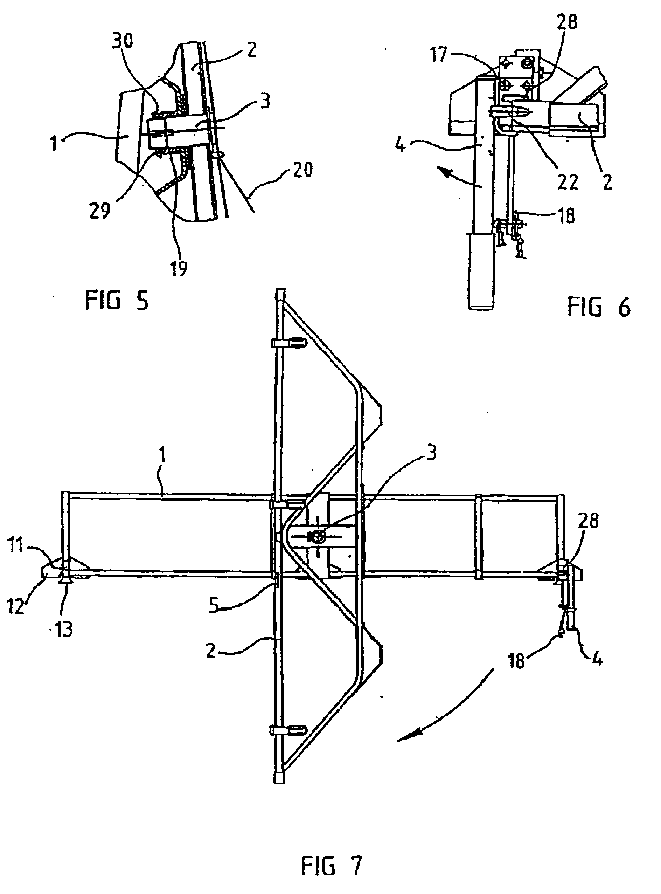

Selon la figure 5, le cadre mobile (2) comporte un axe de rotation (3) qui tourne dans un palier (19) solidaire du cadre fixe (1). L'extrémité de l'axe (3) est fileté pour recevoir un écrou cranté (29) et sa rondelle frein (30) de façon à permettre de règler à volonté la fermeté de la rotation en le vissant plus ou moins.

## Revendications

1. Porte-charges sur fourgons utilitaires composé :
de deux cadres fixes latéraux (1) et (1') reliés entre eux par des barres de toit télescopiques (7) dont ils sont solidaires au moyen des équerres (8) et (8') de deux cadres mobiles latéraux (2) et (2') reliés à pivotement aux deux cadres fixes (1) et (1')
caractérisé en ce que l'organe de liaison à pivotement est constitué d'un palier (19) équipant les deux cadres fixes (1) et (1') dans lequel tourne un axe (3) solidaires des deux cadres mobiles (2) et (2') de façon à permettre indifféremment leur rotation de 90° de l'arrière vers l'avant ou de l'avant vers l'arrière des deux faces latérales du fourgon équipé du porte-charges.

2. Porte-charges sur fourgons utilitaires suivant revendication 1, caractérisé en ce que les cadres fixes (1) et (1') comportent un logement recevant l'extrémité de la broche à ressort (5) solidaire des cadres mobiles (2) et (2') et destiné à maintenir les dits cadres mobiles, après une rotation à 90° en position verticale par rapport au sol de façon à faciliter leur chargement tout en dégageant totalement l'accès à la galerie de toit du véhicule.

3. Porte-charges sur fourgons utilitaires suivant revendication 1, caractérisé en ce que les cadres fixes (1) et (1') comportent à leurs extrémités deux butées (11) et (28) sur lesquelles les cadres mobiles (2) et (2') viennent s'appuyer après une rotation à 90° pour retrouver une position horizontale pour le transport des matériels.

4. Porte-charges sur fourgons utilitaires suivant revendications 1 et 3, caractérisé en ce que les cadres mobiles (2) et (2') en position horizontale, sont juxtaposés aux cadres fixes (1) et (1') et maintenus dans cette position au moyen d'un verrou (4) solidaires des dits cadres fixes et dont l'ergot (22) vient s'engager dans les cadres mobiles.

5. Porte-charges pour fourgons utilitaires suivant revendication 1, caractérisé en ce que les cadres mobiles (2) et (2') sont inclinés par rapport aux cadres fixes (1) et (1') de façon à ce que l'échelle (24) chargée et arrimée sur les dits cadres mobiles en position verticale présente l'inclinaison suffisante pour permettre son utilisation à l'opérateur désireux d'accéder aux barres de toit (7).

6. Porte-charges pour fourgons utilitaires suivant revendications 1 et 5, caractérisé en ce que les cadres mobiles (2) et (2') comportent des crochets articulés (6) destinés à servir d'appui aux matériels d'une certaine longueur chargés sur les dits cadres mobiles.
